(19) Europäisches Patentamt
European Patent Office
Office européen des brevets

(11) **EP 3 452 705 B1**

(12) **EUROPÄISCHE PATENTSCHRIFT**

(45) Veröffentlichungstag und Bekanntmachung des Hinweises auf die Patenterteilung:
**12.02.2020 Patentblatt 2020/07**

(21) Anmeldenummer: **17717707.8**

(22) Anmeldetag: **13.04.2017**

(51) Int Cl.:
*F01M 1/16* (2006.01)     *F01M 5/00* (2006.01)
*F16N 29/02* (2006.01)     *F16H 57/04* (2010.01)

(86) Internationale Anmeldenummer:
**PCT/EP2017/058998**

(87) Internationale Veröffentlichungsnummer:
**WO 2017/190937 (09.11.2017 Gazette 2017/45)**

(54) **FLUIDVERSORGUNGSSYSTEM**

FLUID SUPPLY SYSTEM

SYSTÈME D'ALIMENTATION EN FLUIDE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **03.05.2016 DE 102016207653**

(43) Veröffentlichungstag der Anmeldung:
**13.03.2019 Patentblatt 2019/11**

(73) Patentinhaber: **Mahle International GmbH**
**70376 Stuttgart (DE)**

(72) Erfinder:
• **KIEMLEN, Ralf**
**72760 Reutlingen (DE)**
• **RUTHA, Josef**
**73635 Rudersberg (DE)**
• **SCHMIEDL, Kai-Torsten**
**71155 Altdorf (DE)**
• **STEINHOFF, Michael**
**9122 St. Kanzian (AT)**

(74) Vertreter: **BRP Renaud & Partner mbB**
**Rechtsanwälte Patentanwälte**
**Steuerberater**
**Königstraße 28**
**70173 Stuttgart (DE)**

(56) Entgegenhaltungen:
EP-A1- 2 511 490     WO-A1-2015/172792
DE-B- 1 120 212     FR-A1- 2 655 702
US-B1- 6 742 716

**Beschreibung**

Die vorliegende Erfindung betrifft ein Fluidversorgungssystem mit einer Komponente gemäß dem Oberbegriff des Anspruchs 1. Die Erfindung betrifft außerdem eine Brennkraftmaschine mit zumindest einem solchen Fluidversorgungssystem.

Aus der DE 199 43 294 A1 ist ein Fluidversorgungssystem einer Brennkraftmaschine mit einer Filtereinrichtung und einem stromauf dieser Filtereinrichtung temperaturabhängig in den Fluidkreislauf einschaltbaren Kühler bekannt. In einem unteren und einem oberen Temperaturbereich durchströmt dabei zumindest ein überwiegender Volumenstrom den Kühler, während in einem dazwischen liegenden mittleren Temperaturbereich allenfalls ein nicht überwiegender Volumenstrom den Kühler durchströmt. Hierdurch soll die Temperatur des Fluides optimal an Betriebsbedingungen der Brennkraftmaschine angepasst werden können.

Aus der DE 199 02 408 A1 ist ein Automatikgetriebe für Fahrzeuge mit einem hydrodynamischen Wandler bekannt, der von einer Drucköpumpe über ein Hauptdruckventil mit Öl versorgt wird, wobei ein Wandlersicherheitsventil den Öldruck vor dem Wandler begrenzt und von der Ölzulaufleitung des Wandlers eine Schmierölleitung abzweigt, die ein Schmierventil enthält und wobei zudem ein Ölkühler vorgesehen ist. Dieser Ölkühler ist in einer Ölleitung zwischen dem Hauptdruckventil und der Abzweigung der Schmierölleitung angeordnet und besitzt einen Bypass, dessen Durchfluss gesteuert bzw. geregelt ist.

Aus der WO 2015/172792 A1 ist ein Fluidversorgungssystem mit einer Komponente und mit einem in einem Kontrollkanal angeordneten ersten Bypass-Ventil mit einem Ventilkörper, der zumindest zwischen einer ersten und einer zweiten Stellung verstellbar ist. Der Ventilkörper kann dabei den Kontrollkanal in einen ersten und zweiten Raum trennen und weist eine Leckageöffnung auf, die den ersten Raum mit dem zweiten Raum verbindet. Der zweite Raum ist über einen Leckagekanal mit einem Fluidreservoir verbunden, wobei der Leckagekanal ein schaltbares Ventil zum zumindest teilweisen Schließen des Leckagekanals aufweist und wobei zumindest eine Erfassungseinrichtung vorgesehen ist, die eine Eigenschaft des Fluids erfasst und an eine Steuerungseinrichtung übermittelt, die wiederum derart ausgebildet ist, dass sie das Ventil bei Erreichen einer vordefinierten Eigenschaft schließt und damit den Leckagekanal sperrt.

Weitere Fluidversorgungssysteme sind auch aus der US 6,742,716 B1 sowie der EP 2 511 490 A1 bekannt sein.

Fluidversorgungssysteme in Brennkraftmaschinen, beispielsweise Ölfiltermodule, werden üblicherweise mit einem Kühler ausgestattet, um im Betrieb das Fluid, insbesondere das Öl, vor Schäden wegen zu hohen Temperaturen zu bewahren. Im kalten Zustand steigt jedoch der Druckverlust des kalten Fluides aufgrund der geänderten Fließeigenschaften, weshalb üblicherweise ein mit einem Dehnstoffelement ausgestattetes erstes Bypassventil vorgesehen wird, das bei Unterschreiten bzw. bis zum Erreichen einer vordefinierten Temperatur einen Fluidstrom am Kühler vorbeiführt und erst bei Erreichen der vordefinierten Temperatur den Fluidstrom durch den Kühler, beispielsweise den Ölkühler, leitet. Hierdurch soll auch im kalten Zustand eine ausreichende Schmierung, beispielsweise einer Brennkraftmaschine oder von Lagerstellen, erreicht werden.

Ein gattungsgemäßes Fluidversorgungssystem steuert beispielsweise den Ölfluss in Abhängigkeit eines oder mehrerer Betriebsparameter, welche über einen Sensor erfasst werden. Dabei wird gerade bei Starten der Brennkraftmaschine ein Bypass um den Kühler oder um das Filterelement erzeugt, um die Brennkraftmaschine immer mit Schmieröl versorgen zu können. Beim Stillstand der Brennkraftmaschine besteht jedoch die Gefahr des Leerlaufens des Fluidversorgungssystems durch eine Leckageöffnung, was beim Start der Brennkraftmaschine dazu führt, dass das Ventil zunächst nicht nach den eigentlichen Betriebsdaten gesteuert wird, sondern sich erst "einschwingen" muss.

Die vorliegende Erfindung beschäftigt sich daher mit dem Problem, ein verbessertes Fluidversorgungssystem mit einer Bypassschaltung anzugeben, die insbesondere konstruktiv einfach, kostengünstig ausgebildet ist und sich zudem durch ein verbessertes Startverhalten auszeichnet.

Dieses Problem wird erfindungsgemäß durch den Gegenstand des unabhängigen Anspruchs 1 gelöst. Vorteilhafte Ausführungsformen sind Gegenstand der abhängigen Ansprüche.

Die vorliegende Erfindung beruht auf dem allgemeinen Gedanken, ein zweites Bypassventil vorzusehen, das derart ausgebildet ist, dass ein Einschwingen des ersten Bypassventils bei einem Systemstart zumindest reduziert, vorzugsweise sogar vermieden, indem ein sich stromab des ersten Bypassventils gelegener zweiter Raum beim Starten einer Brennkraftmaschine schneller befüllt und dadurch das erste Bypassventil schneller ordnungsgemäß einstellt. Zugleich wird für eine Bypassschaltung nunmehr ein schaltbares Ventil, insbesondere ein Magnetventil, eingesetzt, dieses jedoch aufgrund seines vergleichsweise kleinen Arbeitshubes nicht direkt zur Schaltung eines Ventilkörpers des erstes Bypassventils genutzt, sondern zum Öffnen bzw. Schließen eines Leckagekanals, der die zum Schalten des Ventilkörpers des erstes Bypassventils erforderlichen Druckverhältnisse beeinflusst. Über das erfindungsgemäß vorgesehene Ventil wird somit kein Verstellen des Ventilkörpers selbst, sondern nur ein Beeinflussen der Druckverhältnisse bewirkt, die zum schnellen Verstellen des Ventilkörpers des ersten Bypassventils führen. Das erfindungsgemäße Fluidversorgungssystem weist dabei eine Komponente, beispielsweise eine Filtereinrichtung zum Filtern des Fluides oder einen Kühler zum Kühlen des Fluides sowie einen diese Komponente umgehenden Bypasskanal auf. In einem Kontrollkanal ist dabei das erste Bypassventil mit dem Ventilkörper angeordnet, der zumindest zwischen einer ersten und einer zweiten Stellung verstellbar ist und der in der ersten Stellung einen Fluidzufluss zur Komponente und in der zweiten Stellung einen Fluidfluss durch den Bypasskanal absperrt, oder umgekehrt. Zwischen den beiden Stellungen sind dabei selbstverständlich auch Zwischenstellungen möglich, in welchen ein Teilfluidstrom zur Komponente und ein Teilfluidstrom durch den Bypasskanal strömen. Der Ventilkörper des ersten Bypassventils trennt dabei den Kontrollkanal in einen ersten und einen zweiten Raum und weist eine Leckageöffnung auf, die den ersten Raum mit dem zweiten Raum verbindet. Im zweiten Raum ist ein Federelement angeordnet, welches den Ventilkörper vorzugsweise in seine zweite Stellung vorspannt, wobei der zweite Raum über einen Leckagekanal mit einem Fluidreservoir verbunden ist. In diesem Leckagekanal ist das erfindungsgemäße schaltbare Ventil, insbesondere das Magnetventil, vorgesehen, mittels welchem der Leckagekanal geöffnet bzw. geschlossen werden kann. Ebenfalls vorgesehen ist eine Erfassungseinrichtung, die eine Eigenschaft, beispielsweise eine Temperatur, des Fluides erfasst und an eine Steuerungseinrichtung übermittelt, die wiederum derart ausgebildet ist, dass sie das Ventil bei Erreichen einer vordefinierten Temperatur schließt und damit den Leckagekanal sperrt. Die Erfassungseinrichtung und die Steuerungseinrichtung können dabei selbstverständlich auch in einem Dehnstoffelement zusammengefasst sein. Mit dem erfindungsgemäßen Fluidversorgungssystem kann somit auf konstruktiv einfache und kostengünstige Weise ein schnell schaltendes erstes Bypassventil geschaffen werden, dessen Schaltbewegung ausschließlich von der Federkraft des Federelements, der Stellung des Ventils und dem Druck des Fluides im ersten und zweiten Raum abhängt. Im Vergleich zu einem über ein Dehnstoffelement schaltbaren ersten Bypassventil, kann dabei das Ventil selbst für den Fall, dass es nicht als Magnetventil ausgebildet ist, sondern ein Dehnstoffelement aufweist, vergleichsweise schnell schalten, da es einen nur sehr geringen Ventilhub aufweist und damit die im zweiten Raum herrschenden Druckverhältnisse schnell beeinflussen, wodurch wiederum aufgrund der beispielsweise zwischen dem ersten und dem zweiten Raum herrschenden Druckdifferenz und der Federkraft ein schnelles Schalten des Ventilkörpers und damit des ersten Bypassventils möglich sind. Von großem Vorteil ist dabei, dass zum Sperren des Leckagekanals ein bereits sehr kleiner Ventilhub des Ventils ausreicht, der von einem solchen Ventil bewerkstelligt werden kann, da der Leckagekanal im Vergleich zum Kontrollkanal einen sehr kleinen Querschnitt besitzt. Durch das zweite Bypassventil kann sich zudem bei einem Start der Brennkraftmaschine ein stromab des ersten Bypassventils gelegener zweiter Raum schneller befüllen, als dies bei einem leergelaufenen System ausschließlich über die Leckageöffnung möglich wäre, wodurch kein Einschwingen des Ventilkörpers des ersten Bypassventils auftritt, sondern sich schnell ein ordnungsgemäßer Betrieb einstellt.

Erfindungsgemäß ist das zweite Bypassventil in der Leckageöffnung des Ventilkörpers angeordnet. Für das Verhindern des Einschwingens des ersten Bypassventils bzw. dessen Ventilkörpers beim Starten der Brennkraftmaschine nach leergelaufenem System ist der Anbringungsort des zweiten Bypassventils unerheblich, sofern es eine schnelle Befüllung des zweiten Raums beim Starten der Brennkraftmaschine ermöglicht.

Das zweite Bypassventil ist in der Leckageöffnung des Ventilkörpers angeordnet und weist einen federbeaufschlagten Ventilkörper auf, der mit einem Dichtelement dicht gegen einen Rand der Leckageöffnung als Ventilsitz vorgespannt ist und der eine Drosselöffnung aufweist, die kleiner ist als die Leckageöffnung. Dies bietet den großen Vorteil, dass das zweite Bypassventil ausschließlich durch eine Modifikation des Ventilkörpers des ersten Bypassventils realisiert werden kann, ohne dass weitere Änderungen notwendig sind, wodurch eine konstruktiv einfache und kostengünstige Herstellung möglich sind.

Nicht erfindungsgemäß ist alternativ dazu auch denkbar, dass das zweite Bypassventil im Bereich des Ventils angeordnet ist, wobei das zweite Bypassventil beispielsweise einen federvorgespannten zylinderartigen Ventilkörper aufweist, der mantelseitige Öffnungen und eine stirnseitige Öffnung aufweist. In diesem Fall weist das zweite Bypassventil darüber hinaus ein Dehnstoffelement sowie einen damit gekoppelten Stempel auf, der bei Überschreiten einer vordefinierten Eigenschaft des Fluides, beispielsweise bei Überschreiten einer vordefinierten Temperatur, die stirnseitige Öffnung schließt und damit den Leckagekanal sperrt. Der federvorgespannte zylinderartige Ventilkörper ist dabei gegen einen Ventilsitz vorgespannt ist und derart ausgebildet, dass er druckabhängig vom Ventilsitz abhebt und dadurch das zweite Bypassventil öffnet. Hierdurch kann insbesondere bei einem leergelaufenen Fluidversorgungssystem und bei startender Brennkraftmaschine ein schnelles Befüllen des zweiten Raums erreicht und ein schnelles Einstellen eines ordnungsgemäßen Betriebs realisiert werden.

In gleicher Weise ergibt sich dies auch bei einer alternativen Ausführungsform, bei der das zweite Bypassventil einen federvorgespannten zylinderartigen Ventilkörper mit einer Ringschulter aufweist und der derart ausgebildet ist, dass er druckabhängig einen den zweiten Raum mit dem Kontrollkanal verbindenden Ausgleichskanal freigibt und dadurch das zweite Bypassventil öffnet.

Bei einer vorteilhaften Weiterbildung der erfindungsgemäßen Lösung ist das Fluidversorgungssystem als Schmierstoffversorgungssystem, insbesondere als Ölversorgungssystem, ausgebildet. Besonders bei Ölfiltermodulen ist aufgrund der Zähigkeit des Öls im kalten Zustand eine Durchleitung desselben durch einen Ölkühler unbedingt zu vermeiden, weshalb das erfindungsgemäße erstes Bypassventil hier in vorteilhafter Weise eingesetzt werden kann, um eine schnelle und effektive Schmierung, beispielsweise der Brennkraftmaschine oder anderer Lagerstellen, sowohl in kaltem, als auch in warmem Zustand zu bewirken.

Bei einer weiteren vorteilhaften Ausführungsform der erfindungsgemäßen Lösung sind die Erfassungseinrichtung als Temperaturerfassungseinrichtung ausgebildet und die Steuerungseinrichtung derart, dass sie das Ventil bei Erreichen der Temperatur von T ≥ 117°C schließt. Bei einer Temperatur von T ≤ 117°C bleibt das Ventil hingegen offen, wodurch ein Leckagestrom zum Fluidreservoir, insbesondere zum Ölreservoir strömt und durch die Druckdifferenz zwischen dem ersten und dem zweiten Raum im Kontrollkanal der Ventilkörper des erstes Bypassventils in seine erste Stellung, entgegen der Federkraft, gedrückt wird. Bei Erreichen der vordefinierten Temperatur von 117°C schließt das Ventil den Leckagekanal ab, so dass über diesen kein Fluidabfluss mehr in das Fluidreservoir erfolgen kann. Nach dem Absperren des Leckagekanals steigt der Druck im zweiten Raum an, bis dieser den Druck im ersten Raum erreicht, woraufhin lediglich noch die Federkraft des Federelements für die Verstellung des Ventilkörpers verantwortlich ist. Die beiden Drücke im ersten und zweiten Raum heben sich in diesem Fall auf. Aufgrund der Federkraft des Federelements wird der Ventilkörper des erstes Bypassventils in seine zweite Stellung verstellt, in welcher der Bypasskanal zum Bypass geschlossen und der Fluidkanal zur Komponente geöffnet ist. In diesem Zustand wird somit der Fluidstrom über die Komponente geleitet.

Bei einer weiteren vorteilhaften Ausführungsform der erfindungsgemäßen Lösung ist der Ventilkörper als Ventilkolben ausgebildet, der eine mantelseitige erste Öffnung zum Bypasskanal und eine mantelseitige zweite Öffnung zur Komponente aufweist. Dies stellt lediglich eine mögliche Ausführungsform des erfindungsgemäßen Ventilkörpers dar, welche jedoch vergleichsweise einfach und kostengünstig herzustellen ist und zugleich vergleichsweise einfach die Druckverhältnisse im ersten und zweiten Raum ermöglicht. Hierzu ist beispielsweise die Leckageöffnung im Boden des Ventilkolbens angeordnet.

Bei einer vorteilhaften Weiterbildung der erfindungsgemäßen Lösung ist der Ventilkolben oder der Ventilkörper selbst aus Metall oder aus Kunststoff ausgebildet, wobei eine Ausbildung aus Metall eine besonders hohe Beständigkeit auch gegenüber aggressiven Fluiden ermöglicht. Demgegenüber kann durch eine Ausbildung des Ventilkolbens/Ventilkörpers aus Kunststoff eine vergleichsweise kostengünstige Herstellung erreicht werden.

Bei einer vorteilhaften Weiterbildung der erfindungsgemäßen Lösung weist das Ventil ein Magnetventil, einen elektrischen Schalter, ein Bimetall und/oder ein Dehnstoffelement auf oder ist als solches ausgebildet. Besonders die Ausführungsform als Magnetventil, als Bimetall oder als elektrischer Schalter ermöglicht ein vergleichsweise schnelles Schalten und damit ein schnelles Reagieren.

Zweckmäßig kann die Komponente als Kühler, Getriebe oder Filtereinrichtung ausgebildet sein. Bereits diese nicht abschließende Aufzählung lässt erahnen, welch mannigfaltige Einsatzmöglichkeiten für das erfindungsgemäße Fluidversorgungssystem, insbesondere bei einer Brennkraftmaschine gegeben sind. Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Dabei zeigen, jeweils schematisch

Fig. 1    ein erfindungsgemäßes Fluidversorgungssystem bei einer Fluideigenschaft unterhalb einer vordefinierten Eigenschaft mit einem in das erste Bypassventil integrierten zweiten Bypassventil,

Fig. 2    eine Darstellung wie in Fig. 1, jedoch bei einer Eigenschaft des Fluides oberhalb der vordefinierten Eigenschaft,

Fig. 3    eine Detaildarstellung des zweiten Bypassventils gemäß den Fig. 1 und 2,

Fig. 4    eine Ausführungsform mit einem nicht am Ventilkörper des ersten Bypassventils angeordneten zweiten Bypassventil,

Fig. 5    eine alternative Ausführungsform zu Fig. 4.

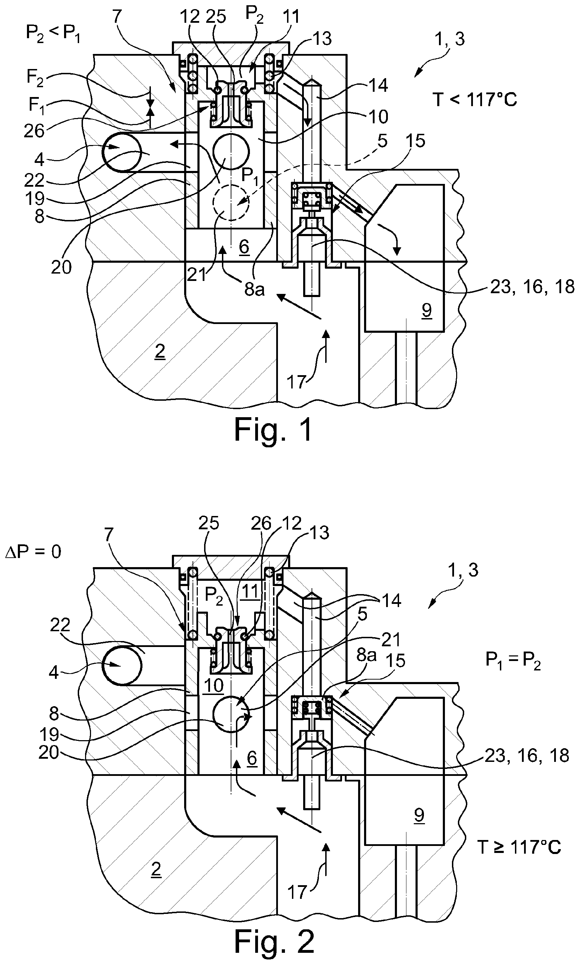

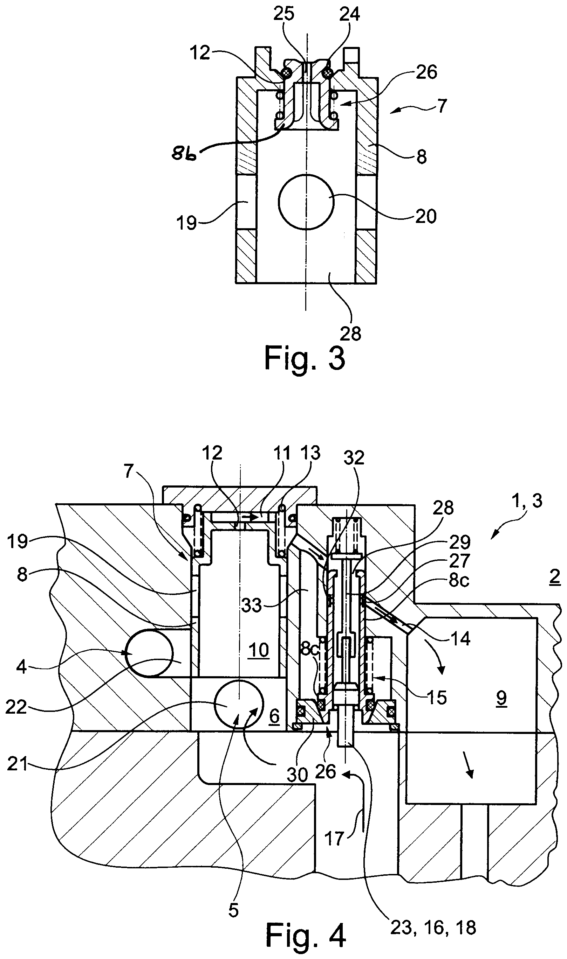

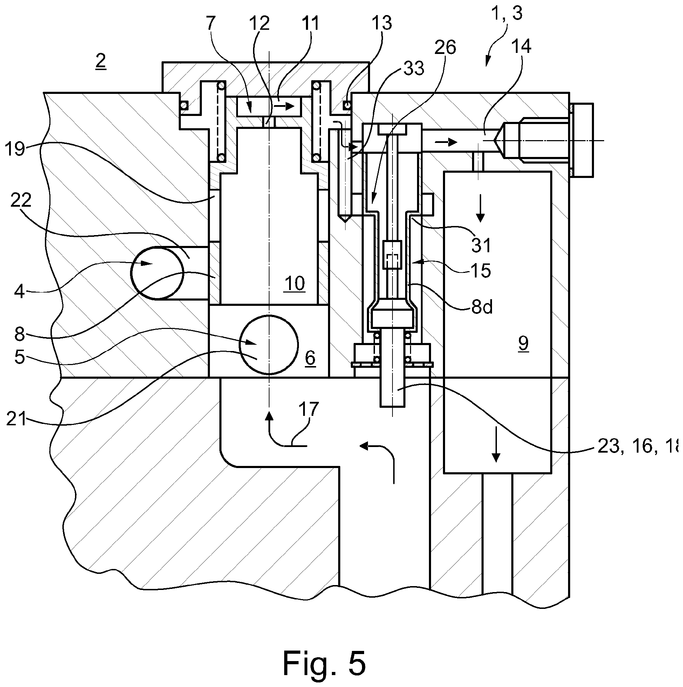

Entsprechend den Fig. 1, 2 (erfindungsgemäß) sowie 4 und 5, weist ein Fluidversorgungssystem 1, insbesondere einer Brennkraftmaschine 2, beispielsweise ein Schmierstoffversorgungssystem und insbesondere ein Ölversorgungssystem 3, eine Komponente 5 sowie einen diesen umgehenden Bypass 4 auf. Die Komponente 5 kann beispielsweise als Kühler, Getriebe oder Filtereinrichtung ausgebildet sein. Gemäß den Fig. 1, 2, 4 und 5 sind dabei lediglich der Fluidkanal 21 zur Komponente 5 und der Bypasskanal 22 zum Bypass 4 gezeigt, so dass sich die eigentliche Komponente 5 unterhalb der dargestellten Bildebene befindet. In einem Kontrollkanal 6 ist dabei ein erstes Bypassventil 7 mit einem Ventilkörper 8 angeordnet, der zwischen einer ersten Stellung (vergleiche Fig. 1) und einer zweiten Stellung (vergleiche Fig. 2, 4 und 5) verstellbar ist, und der in der ersten Stellung den Fluidkanal 21 zur Komponente 5 und in der zweiten Stellung den Bypasskanal 22 absperrt, oder umgekehrt. Der Kontrollkanal 6 führt dabei indirekt über eine nicht gezeigte Fluidpumpe zu einem Fluidreservoir 9. In der Fig. 1 ist der Ventilkörper 8 in der ersten Stellung oben angeordnet, während er in den Figuren 4 und 5 in der ersten Stellung unten angeordnet ist und umgekehrt. Aus diesem Grund ist in den Fig. 1, 2 sowie 4 und 5 dabei ein Federelement 13 als Druckfeder ausgebildet.

Betrachtet man den Kontrollkanal 6 näher, so kann man erkennen, dass der Ventilkörper 8 den Kontrollkanal 6 in einen ersten Raum 10 und einen zweiten Raum 11 unterteilt und zugleich eine Leckageöffnung 12 aufweist, die den ersten Raum 10 mit dem zweiten Raum 11 verbindet. Im zweiten Raum 11 ist darüber hinaus das Federelement 13 angeordnet, das den Ventilkörper 8 in seine gemäß den Fig. 2, 4 und 5 dargestellte zweite Stellung vorspannt. Der zweite Raum 11 ist darüber hinaus über einen Leckagekanal 14 mit dem Fluidreservoir 9 verbunden, wobei in dem Leckagekanal 14 ein Ventil 15, insbesondere ein Magnetventil, zum zumindest teilweise Öffnen/Schließen des Leckagekanals 14 angeordnet ist. Gemäß den Fig. 1, 4 und 5 ist dabei das Ventil 15 in seiner Öffnungsstellung gezeigt, in welcher der zweite Raum 11 über den Leckagekanal 14 mit dem Fluidreservoir 9, welches drucklos ist, verbunden ist. Demgegenüber zeigt die Fig. 2 das Ventil 15 in seiner geschlossenen Stellung. Generell kann dabei das Ventil 15 ein Magnetventil, einen elektrischen Schalter, ein Bimetall und/oder ein Dehnstoffelement 23 aufweisen. Besonders die Ausführungsform als Magnetventil, als Bimetall oder als elektrischer Schalter ermöglicht ein vergleichsweise schnelles Schalten und damit ein schnelles Reagieren.

Darüber hinaus weist das erfindungsgemäße Fluidversorgungssystem 1 eine Erfassungseinrichtung 16, beispielsweise eine Temperaturerfassungseinrichtung mit einem Temperatursensor, auf, die/der eine Eigenschaft, insbesondere die Temperatur, des Fluides 17, beispielsweise Öl oder Schmierstoff, erfasst und an eine Steuerungseinrichtung 18 übermittelt, die wiederum derart ausgebildet ist, dass sie das Ventil 15 bei Erreichen einer vordefinierten Eigenschaft, beispielsweise einer vordefinierten Temperatur T, schließt und damit den Leckagekanal 14 sperrt. Zu diesem Zweck ist die Steuerungseinrichtung 18 selbstverständlich auch mit dem Ventil 15 verbunden. Die Erfassungseinrichtung 16 und die Steuerungseinrichtung 18 können dabei selbstverständlich auch in einem Dehnstoffelement 23 zusammengefasst sein.

In den Figuren 1 und 2 ist die Erfassungseinrichtung 16 als Temperaturerfassungseinrichtung ausgebildet und erfasst demzufolge die Temperatur des Fluides 17. Die vordefinierte Temperatur T kann dabei beispielsweise bei $\geq$ 117°C liegen, so dass gemäß der Fig. 1 ein Zustand des erfindungsgemäßen Fluidversorgungssystems 1 bei einer Temperatur T < 117°C und gemäß der Fig. 2 bei einer Temperatur T $\geq$ 117°C gezeigt ist.

Betrachtet man den Ventilkörper 8 gemäß den Fig. 1 bis 3 näher, so kann man erkennen, dass dieser als Ventilkolben ausgebildet ist, der eine mantelseitige erste Öffnung 19 und eine mantelseitige zweite Öffnung 20 aufweist, wobei je nach Schaltstellung des Ventilkörpers 8 die erste Öffnung 19 mit dem Bypasskanal 22 zum Bypass 4 oder die zweite Öffnung 20 mit dem Fluidkanal 21 zur Komponente 5 fluchtet. Die Öffnungen 19, 20 sind um die Mittelachse des Ventilkörpers 8 auf gleicher Höhe angeordnet. Beim Verschieben des Ventilkolbens wandern die Öffnungen 19, 20, so dass sie entweder den Kanal 21 oder 22 freigeben. Bei dem Ventilkörper 8 gemäß den Fig. 4 und 5 besitzt der Ventilkörper 8 nur eine mantelseitige Öffnung 19. Die Leckageöffnung 12 ist dabei in einem Boden des Ventilkörpers 8 angeordnet. Der Ventilkolben selbst kann beispielsweise aus Metall oder aus Kunststoff ausgebildet sein, wobei die Ausbildung aus Metall einen besonders hohen Widerstand gegen sämtliche Fluide 17 bietet, während eine Ausführung aus Kunststoff vergleichsweise kostengünstig hergestellt werden kann.

Das erfindungsgemäße Fluidversorgungssystem 1 funktioniert dabei bei einer als Temperaturerfassungseinrichtung ausgebildeten Erfassungseinrichtung 16 wie folgt:
Bei einer Temperatur T < 117°C stellt sich die gemäß der Fig. 1 dargestellte Situation ein, bei welcher die Temperaturerfassungseinrichtung 16 die Temperatur erfasst, an die Steuerungseinrichtung 18 weiterleitet und diese daraufhin das Ventil 15 geöffnet hält. Das in den Kontrollkanal 6 einströmende Fluid 17 erzeugt somit im ersten Raum 10 einen Druck $P_1$, wobei es über die Drosselöffnung 25 in den zweiten Raum 11 strömen kann und über diesen und den geöffneten Leckagekanal 14 in das Fluidreservoir 9. Nur in bestimmten Betriebszuständen öffnet das zweite Bypassventil 26 und gibt die Leckageöffnung 12 frei. Das Fluidreservoir 9 ist dabei üblicherweise drucklos, wobei jedoch ein Ventilkörper 8a des Ventils 15 beispielsweise als Drossel ausgebildet sein kann, so dass sich im zweiten Raum 11 nicht der Umgebungsdruck einstellt, sondern lediglich ein im Hinblick auf den im ersten Raum 10 herrschenden Druck $P_1$ reduzierter Druck $P_2$. Zwischen dem ersten Raum 10 und dem zweiten Raum 11 stellt sich somit eine Druckdifferenz $\Delta P$ ein, die der Federkraft des Federelements 13 entgegenwirkt. Die im vorliegenden Fall von unten auf den Ventilkörper 8 einwir- kende Kraft $F_1$ bemisst sich dabei zu

$$F_1 = P \cdot A_{(Ventilkörper)} - \Delta P \cdot A_{(Ventilkörper)},$$

wogegen sich die von oben auf den Ventilkörper 8 wirkende Kraft $F_2$ wie folgt bemisst:

$$F_2 = \Delta P \cdot A_{\text{(Ventilkörper)}} + F_{\text{Feder}}$$

und wobei gilt

$$F_1 > F_2.$$

Hierdurch verschiebt sich der Ventilkörper 8 nach oben, bis die erste mantelseitige Öffnung 19 mit dem zur Filtereinrichtung 4 führenden Bypasskanal 22 fluchtet und das Fluid 17 in den Bypass 4 strömen kann. Ein kleiner Leckagestrom des Fluides 17 kann auch über die Drosselöffnung 25 in den zweiten Raum 11 und über den Leckagekanal 14 in das Fluidreservoir 9 gelangen.

Bei Erreichen der vordefinierten Temperatur T von $\geq 117°C$, schaltet das erste Bypassventil 7 vergleichsweise schnell in die gemäß der Fig. 2 dargestellte Stellung, da bei Erreichen der vordefinierten Temperatur T die Steuerungseinrichtung 18 ein entsprechendes Signal an das Ventil 15 übermittelt und dieses daraufhin den Ventilkörper 8a in seine Schließstellung überführt und den Leckagekanal 14 schnell sperrt. Da der Leckagekanal 14 im Vergleich zum Kontrollkanal 6 einen deutlich verringerten Querschnitt hat, kann hier auch ein einen lediglich geringen Ventilhub aufweisendes aber gleichzeitig schnell schaltendes Ventil 15 eingesetzt werden. Nach dem Schließen des Ventils 15 steigt der Druck $P_2$ im zweiten Raum 11 auf den Druck $P_1$ im ersten Raum 10, woraus ein $\Delta P$ von null ergibt. In diesem Fall erfolgt somit keinerlei druckabhängige Verstellung des Ventilkörpers 8 des erstes Bypassventils 7 mehr, da die von unten auf den Ventilkörper 8 druckbedingt wirkende Kraft $F_1$ der von oben auf den Ventilkörper 8 ausschließlich druckbedingten Kraft F entspricht. Trotzdem ist selbstverständlich die von oben auf den Ventilkörper 8 wirkende Kraft $F_2$ größer als die Kraft $F_1$, da von oben zusätzlich noch die Kraft $F_{\text{(Feder)}}$ des Federelements 13 auf den Ventilkörper 8 wirkt. Es gilt somit für den gemäß der Fig. 2 dargestellten Zustand:

$$F_2 > F_1 \, |$$

mit

$$F_2 = P \cdot A_{\text{(Ventilkörper)}} + F_{\text{Feder}}; \text{ und } F1 = P \cdot A_{\text{(Ventilkörper)}}$$

Mit dem erfindungsgemäßen erstes Bypassventil 7 und dem erfindungsgemäßen Fluidversorgungssystem 1 ist eine Steuerung des Ventilkörpers 8 des erstes Bypassventils 7 über die Federkraft $F_{\text{Feder}}$ über den Fluiddruck $P_1$, $P_2$ und über die Stellung des Ventilkörpers 8a des Ventils 15 möglich. Je nachdem, ob das Ventil 15 geöffnet oder geschlossen ist, kann über eine gezielte Auslegung der Federkraft $F_{\text{(Feder)}}$ des Federelements 13 der Ventilkörper 8 den Bypasskanal 22 zum Bypass 4 öffnen bzw. schließen.

Betrachtet man das Fluidversorgungssystem 1 nach den Fig. 1 bis 3, so kann man erkennen, dass das zweite Bypassventil 26 an/in der Leckageöffnung 12 des Ventilkörpers 8 angeordnet ist. Das zweite Bypassventil 26 besitzt ferner einen federbeaufschlagten Ventilkörper 8b, der in der Leckageöffnung 12 angeordnet und mit einem Dichtelement 24 dicht gegen die Leckageöffnung 12 vorgespannt ist. Der Ventilkörper 8b des zweiten Bypassventils 26 weist eine Drosselöffnung 25 auf, die kleiner ist als die Leckageöffnung 12. Hierdurch kann insbesondere ein schnelles Ablaufen des Fluides 17 aus dem Raum 11 nach dem Abstellen der Brennkraftmaschine 2 vermieden werden.

Betrachtet man das Fluidversorgungssystem 1 nach der Fig. 4 und 5, so kann man erkennen, dass das zweite Bypassventil 26 im Bereich des Ventils 15 angeordnet ist. Dabei weist das zweite Bypassventil 26 gemäß der Fig. 4 einen federvorgespannten zylinderartigen Ventilkörper 8c aufweist, der eine umlaufende Ringnut 27 besitzt, in der das Öl den Ventilkörper 8c umströmen und in den Leckagekanal 14 zum Fluidreservoir 9 strömen kann. Darüber hinaus besitzt der Ventilkörper 8c auch noch eine in der Ringnut 27 angeordnete Öffnung 32, die den Ventilkörper 8c durchdringt sowie eine stirnseitige Öffnung 28.

Bei den Ausführungsformen des Ventils 15 gemäß den Fig. 4 und 5, weist das zweite Bypassventil 26 ein Dehnstoffelement 23 sowie gemäß der Fig. 4 einen damit gekoppelten Stempel 29 aufweist, der bei Überschreiten einer vordefinierten Eigenschaft des Fluides 17 die stirnseitige Öffnung 28 schließt und damit den Leckagekanal 14 sperrt, der in diesem Fall durch den Ventilkörper 8c verläuft.

Der federvorgespannte zylinderartige Ventilkörper 8c ist gegen einen Ventilsitz 30 vorgespannt ist und derart ausgebildet ist, dass er druckabhängig vom Ventilsitz 30 abhebt und dadurch das zweite Bypassventil 26 öffnet.

Bei dem Bypassventil 26 gemäß der Fig. 5 weist dieses einen federvorgespannten zylinderartigen Ventilkörper 8d mit einer Ringschulter 31 auf und ist derart ausgebildet, dass er druckabhängig einen den zweiten Raum 11 mit dem Kontrollkanal 6 verbindenden Ausgleichskanal 33 freigibt und dadurch das zweite Bypassventil 26 öffnet.

Unabhängig von der jeweils gewählten Ausführungsform des zweiten Bypassventils 26, ermöglicht dieses ein bei einem erneuten Starten der Brennkraftmaschine 2 bei gleichzeitig leerem Raum 11 ein schnelles Befüllen desselben und damit einen schnellen ordnungsgemäßen Betrieb.

Sofern das Ventil 15 als Magnetventil oder als elektrisch schaltbares Ventil ausgebildet ist, kann es selbstverständlich derart ausgestaltet sein, dass es eine sogenannte fail-safe-Funktion erfüllt, das heißt es muss bestromt werden, um in den gemäß der Fig. 1 dargestellten (Öffnungs-)zustand überführt zu werden. Stromlos verbleibt das Ventil 15 im geschlossenen Zustand, so dass das Fluid 17 bzw. das Öl immer über die Komponente 5 geleitet wird und Beschädigungen vermieden werden können.

Die in den Fig. 1 und 2 dargestellte vordefinierte Temperatur T = 117°C stellt selbstverständlich lediglich eine mögliche Temperatur dar, die beispielsweise für Öl als Fluid 17 gilt. Als Erfassungsgröße können selbstverständlich auch andere Parameter dienen.

Mit dem erfindungsgemäßen Fluidversorgungssystem 1 ist somit ein vergleichsweise schnelles Schalten des erstes Bypassventils 7 möglich, ohne dass hierfür eine Betätigungseinrichtung mit einem vergleichsweise großen Ventilhub erforderlich wäre, da der Ventilhub des Ventils 15 zur Steuerung des Ventilkörpers 8 im Leckagekanal 14 völlig ausreichend ist, um die Druckverhältnisse $P_1$, $P_2$ zu beeinflussen und dadurch das erstes Bypassventil 7 zu steuern.

## Patentansprüche

1. Fluidversorgungssystem (1) mit einer Komponente (5), aufweisend

   - ein in einem Kontrollkanal (6) angeordnetes erstes Bypassventil (7) mit einem Ventilkörper (8), der zumindest zwischen einer ersten und einer zweiten Stellung verstellbar ist,
   - wobei der Ventilkörper (8) den Kontrollkanal (6) in einen ersten und einen zweiten Raum (10,11) trennt und eine Leckageöffnung (12) aufweist, die den ersten Raum (10) mit dem zweiten Raum (11) verbindet,
   - wobei der zweite Raum (11) über einen Leckagekanal (14) mit einem Fluidreservoir (9) verbunden ist,
   - wobei in dem Leckagekanal (14) ein schaltbares Ventil (15) zum zumindest teilweise Öffnen/Schließen des Leckagekanals (14) angeordnet ist,
   - wobei zumindest eine Erfassungseinrichtung (16) vorgesehen ist, die eine Eigenschaft des Fluides (17) erfasst und an eine Steuerungseinrichtung (18) übermittelt, die wiederum derart ausgebildet ist, dass sie das Ventil (15) bei Erreichen einer vordefinierten Eigenschaft schließt und damit den Leckagekanal (14) sperrt,
   - ein zweites Bypassventil (26), welches derart ausgebildet ist, dass ein Einschwingen des ersten Bypassventils (7) bei einem Systemstart zumindest reduziert wird,
   **dadurch gekennzeichnet,**
   **dass** das zweite Bypassventil (26) in der Leckageöffnung (12) des Ventilkörpers (8) angeordnet ist,
   **dass** das zweite Bypassventil (26) einen federbeaufschlagten Ventilkörper (8b) aufweist, der
   - in der Leckageöffnung (12) angeordnet ist,
   - mit einem Dichtelement (24) dicht gegen einen Rand der Leckageöffnung (12) vorgespannt ist,
   - eine Drosselöffnung (25) aufweist, die kleiner ist als die Leckageöffnung (12).

2. Fluidversorgungssystem nach einem der vorhergehenden Ansprüche,
   **dadurch gekennzeichnet,**
   **dass** die Erfassungseinrichtung (16) als Temperaturerfassungseinrichtung ausgebildet ist und dass die Steuerungseinrichtung (18) derart ausgebildet ist, dass sie das Ventil (15) bei Erreichen der Temperatur von $T \geq 117\,°C$ schließt.

3. Fluidversorgungssystem nach einem der vorhergehenden Ansprüche,
   **dadurch gekennzeichnet,**
   **dass** die Komponente (5) als Kühler, Getriebe oder Filtereinrichtung ausgebildet ist.

4. Fluidversorgungssystem nach einem der vorhergehenden Ansprüche,
   **dadurch gekennzeichnet,**
   **dass** das Fluidversorgungssystem (1) als Schmierstoffversorgungssystem, insbesondere als Ölversorgungssystem (3), ausgebildet ist.

5. Brennkraftmaschine (2) mit einem Fluidversorgungssystem (1) nach einem der vorhergehenden Ansprüche.

## Claims

1. Fluid supply system (1) having one component (5),
   having

   - a bypass valve (7), disposed in a control channel (6), having a valve body (8) which can be adjusted at least between a first and a second position,
   - wherein the valve body (8) divides the control channel (6) into a first and a second chamber (10, 11) and has a leakage opening (12) which connects the first chamber (10) with the second chamber (11),
   - wherein the second chamber (11) is connected via a leakage channel (14) with a fluid reservoir (9),
   - wherein in the leakage channel (14) is disposed a switchable valve (15) for the at least partial opening/closing of the leakage channel (14),
   - wherein at least one detecting device (16) is provided, which detects a characteristic of the fluid (17) and transmits it to a controlling device (18), which in turn is configured such that it closes the valve (15) when a predefined characteristic is reached and therewith blocks the leakage channel (14),
   - a second bypass valve (26) which is designed such that a transient oscillation of the first bypass valve (7) at a system start is at least reduced,
   **characterised in**
   **that** the second bypass valve (26) is disposed in the leakage opening (12) of the valve body (8),
   **that** the second bypass valve (26) has a spring-loaded valve body (8b), which
   - is disposed in the leakage opening (12),
   - is preloaded with a sealing element (24) sealingly against an edge of the leakage opening (12),
   - has a choke opening (25) which is smaller than the leakage opening (12).

2. Fluid supply system according to any of the preceding claims,
   **characterised in**
   **that** the detecting device (16) is in the form of a temperature detecting device and that the controlling device (18) is configured such that it closes the valve (15) when the temperature of T ≥ 117 °C is reached.

3. Fluid supply system according to any of the preceding claims,
   **characterised in**
   **that** the component (5) is in the form of a cooler, gear or filter device.

4. Fluid supply system according to any of the preceding claims,
   **characterised in**
   **that** the fluid supply system (1) is in the form of a lubrication supply system, in particular an oil supply system (3).

5. Internal combustion engine (2) having a fluid supply system (1) according to any of the preceding claims.

## Revendications

1. Système d'alimentation en fluide (1) avec un composant (5), présentant

   - une première soupape de dérivation (7) agencée dans un canal de contrôle (6) avec un corps de soupape (8) qui peut se déplacer au moins entre une première et une seconde position,
   - dans lequel le corps de soupape (8) sépare le canal de contrôle (6) en un premier et un second espace (10, 11) et présente une ouverture de vidange (12) qui relie le premier espace (10) au second espace (11),
   - dans lequel le second espace (11) est relié à un réservoir de fluide (9) via un canal de vidange (14),
   - dans lequel on agence dans le canal de vidange (14) une soupape commutable (15) pour l'ouverture/fermeture au moins partielle du canal de vidange (14),
   - dans lequel il est prévu au moins un dispositif de détection (16) qui détecte une propriété du fluide (17) et la transmet à un dispositif de commande (18) qui est en outre conçu de manière à fermer la soupape (15) lorsqu'une propriété prédéfinie est atteinte et à bloquer ainsi le canal de vidange (14),
   - une seconde soupape de dérivation (26), qui est conçue de sorte qu'une transition de la première soupape de dérivation (7) soit au moins réduite lors d'un démarrage du système,
   **caractérisé en ce que**,
   la seconde soupape de dérivation (26) est agencée dans l'ouverture de vidange (12) du corps de soupape (8),

la seconde soupape de dérivation (26) présente un corps de soupape (8b) sollicité par un ressort qui
- est agencé dans l'ouverture de vidange (12),
- est pré-sollicité par un élément d'étanchéité (24) de manière hermétique contre un bord de l'ouverture de vidange (12), et
- présente une ouverture d'étranglement (25) qui est plus petite que l'ouverture de vidange (12).

2. Système d'alimentation en fluide selon l'une quelconque des revendications précédentes, **caractérisé en ce que**, le dispositif de détection (16) se présente sous la forme d'un dispositif de détection de température et le dispositif de commande (18) est conçu de manière à fermer la soupape (15) lorsqu'est atteinte la température de T ≥ 117 °C.

3. Système d'alimentation en fluide selon l'une quelconque des revendications précédentes, **caractérisé en ce que**, le composant (5) est conçu sous la forme d'un refroidisseur, d'une transmission ou d'un dispositif filtrant.

4. Système d'alimentation en fluide selon l'une quelconque des revendications précédentes, **caractérisé en ce que**, le système d'alimentation en fluide (1) est conçu sous la forme d'un système d'alimentation en lubrifiant, en particulier sous la forme d'un système d'alimentation en huile (3).

5. Moteur à combustion interne (2) équipé d'un système d'alimentation en fluide (1) selon l'une quelconque des revendications précédentes.

$P_2 < P_1$

7  12 25  $P_2$  11

13

1, 3

$F_2$

14

$F_1$

10

26

5  15

4

22

19

8  $P_1$

20  6

21  8a

23, 16, 18

2  9

17

T < 117°C

## Fig. 1

$\Delta P = 0$

25  26 12  13

7

11

1, 3

$P_2$

14

22

5

4

21

8a  15

10

8

$P_1 = P_2$

19

20  6

23, 16, 18

2  9

17

T ≥ 117°C

## Fig. 2

Fig. 3

Fig. 4

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19943294 A1
- DE 19902408 A1
- WO 2015172792 A1
- US 6742716 B1
- EP 2511490 A1